Europäisches Patentamt

(19) European Patent Office

Office européen des brevets

(11) Publication number: **0 086 015**
**B1**

(12) **EUROPEAN PATENT SPECIFICATION**

(45) Date of publication of patent specification: **16.04.86**

(21) Application number: **83200148.1**

(22) Date of filing: **27.01.83**

(51) Int. Cl.⁴: **G 11 B 5/23, G 11 B 5/58** // **G11B5/52, G11B15/52**

(54) Magnetic head having a step-shaped gap.

(30) Priority: **12.02.82 NL 8200530**

(43) Date of publication of application:
**17.08.83 Bulletin 83/33**

(45) Publication of the grant of the patent:
**16.04.86 Bulletin 86/16**

(84) Designated Contracting States:
**AT DE FR GB NL**

(56) References cited:
**DE-A-2 202 731**
**GB-A-1 017 223**
**GB-A-2 028 185**
**US-A-3 244 818**
**US-A-3 440 360**
**US-A-4 071 856**

PATENTS ABSTRACTS OF JAPAN, vol. 1, no.
34, 31st March 1977, page 1818 E 76
PATENTS ABSTRACTS OF JAPAN, vol. 3, no.
81, 12th July 1979, page 76 E 122
PATENTS ABSTRACTS OF JAPAN, vol. 1, no.
123, 17th October 1977, page 5175 E 7
PATENTS ABSTRACTS OF JAPAN, vol. 2, no.
133, 8th November 1978, page 8189 E 78

(73) Proprietor: **N.V. Philips' Gloeilampenfabrieken**
**Groenewoudseweg 1**
**NL-5621 BA Eindhoven (NL)**

(72) Inventor: **Bril, Thijs Willem**
**c/o Int. Octrooibureau B.V. Prof. Holstlaan 6**
**NL-5656 AA Eindhoven (NL)**
Inventor: **Dekker, Pieter**
**c/o Int. Octrooibureau B.V. Prof. Holstlaan 6**
**NL-5656 AA Eindhoven (NL)**
Inventor: **Postma, Lambertus**
**c/o Int. Octrooibureau B.V. Prof. Holstlaan 6**
**NL-5656 AA Eindhoven (NL)**
Inventor: **Witmer, Cornelis Henricus Maria**
**c/o Int. Octrooibureau B.V. Prof. Holstlaan 6**
**NL-5656 AA Eindhoven (NL)**

(74) Representative: **Koppen, Jan et al**
**INTERNATIONAAL OCTROOIBUREAU B.V. Prof.**
**Holstlaan 6**
**NL-5656 AA Eindhoven (NL)**

Courier Press, Leamington Spa, England.

# Description

The invention relates to a magnetic head having a core of a magnetic material which includes two core parts of a width which is larger than the width of a recording/playback track, between which core parts a gap filled with non-magnetic material is formed which has a central gap part having a gap length which is selected for transducing the carrier frequency of a video signal, said central gap part being flanked on both sides by side gaps of a gap length which is selected for suppressing the carrier frequency of a video signal.

Such a magnetic head is known from Patent Abstracts of Japan, vol. 3, No. 81, 12 July 1979, page 76 E 122.

Magnetic recording and playback techniques have of late made significant progress, in particular in connection with improvement of the techniques for recording signals of extremely high frequencies as they are used in video recorders.

As is known, the video signal can be written on a magnetic tape in oblique tracks by means of e.g. two magnetic heads moving at high speed. In the VIDEO 2000 system this is done by passing the tape at a speed of 2.44 cm/s in the form of a helix over 186° around a drum. The part of the drum to which the two magnetic heads present diametrically opposite to each other are connected, rotates at a circumferential speed of 5.08 m/s. In order to avoid, as far as the luminance signal is concerned, cross-talk between two tracks written one after the other, the gaps of the magnetic heads, which (viewed in the direction of movement) are 0.5 µm long and approximately 22 µm wide, are not placed perpendicular to the direction of movement. In fact, each gap makes an angle of 15° (the azimuth angle) with the normal to the direction of movement, the two writing gaps being shifted in opposite directions. As a result of this the tracks can be written on the tape without intermediate space.

Because it is undesired both from a point of view of magnetic reluctance and from a point of view of handlability and mechanical rigidity to give the core of a video head a width which corresponds to the width of a video track (in the VIDEO 2000 system this width is slightly less than 22.6 µm), it is conventional to use cores of a width (150 µm in the VIDEO 2000 system) which is larger (and in the VIDEO 2000 system substantially larger) than the width of a video track and to take measures to provide for an effective transducing gap width which is equal to the video track width. In the known magnetic head this is realized by giving the gap a step shape, so that a central gap part of a relatively short gap length is flanked by side gaps of a relatively long gap length, the latter being integer times the longest wavelength of the signals used. Hereby the reading of video signals from adjoining tracks is suppressed.

The present invention is based on the idea that side gaps not only can be used for suppressing video signals from adjoining tracks, but also, provided that they are properly dimensioned, for reproducing (low frequency) track positioning signals.

For that purpose a magnetic head of the above described type is characterized in that the side gaps end in recesses made in the side edges of the core parts, there widths being substantially equal to the width of the central gap portion, and their lengths being adapted for reproducing track positioning signals.

With the inventive magnetic head is is possible to have the central gap portion scan a particular video track and to simultaneously get track following information by comparing the track positioning signals from the adjoining tracks which are read by the side gaps.

By means of, for example, a laser recesses are made in the edges of the core parts so that the side gaps end in these recesses, to ensure that the head during a reading operation does not read tracking signals (in the VIDEO 2000 system they are called dynamic track following signals) of tracks which are not immediately adjoining the scanned video track.

A first embodiment of the inventive magnetic head is characterized in that the lengths of the side gaps are adapted to reproduce track positioning signals having a wavelength in the order of magnitude of 50 µm. E.g. with a length of the side gaps of 10 µm (which is realisable by means of a reactive ion etching process) is associated a tracking signal having a wavelength of 50 µm.

For a good operation the lengths of the side gaps in practice will be at least ten times as large as the length of the central gap part.

A second embodiment of the inventive magnetic head is characterized in that one core part has a gap-bounding face which is flat while the other core part has a gap-bounding face in which channels of a defined depth are provided on both sides of the central part by means of an etching process. During the assembly of the magnetic head the two core parts are placed opposite to each other with the flat gap-bounding face and the gap-bounding face provided with channels in facing relationship in such manner that in the centre a gap results having a desired gap length (of, for example, 0.3 µm). The central gap and the two side gaps—having, for example, a 10 times larger gap length—can then be filled with glass in one step.

A third embodiment of the inventive magentic head is characterized in that both core parts have a gap-bounding face in which channels of a defined depth have been provided on both sides of the central gap part by means of an etching process.

Preferably the channels are provided into the gap-bounding faces by means of a reactive ion etching process. Channels produced by means of a reactive ion etching process can have a substantially rectangular cross-section. This considerably increases the accuracy with which the width of the central gap part can be defined.

A further embodiment of the inventive magnetic head is characterized in that the central gap part is filled with a material which has a higher resistance to etching than the material of the core. If the material of the core is Mn-Zn-ferrite, and reactive ion etching is used for producing the channels, preferably $Al_2O_3$ is used as the non-magnetic material which fills the central gap part.

The invention will be described in greater detail with reference to the drawing.

Figure 1 is a perspective view of a magnetic head.

Figure 2 shows an assembly of two blocks of core material.

Figure 3 shows diagrammatically the tape contact face of the magnetic head of Figure 1.

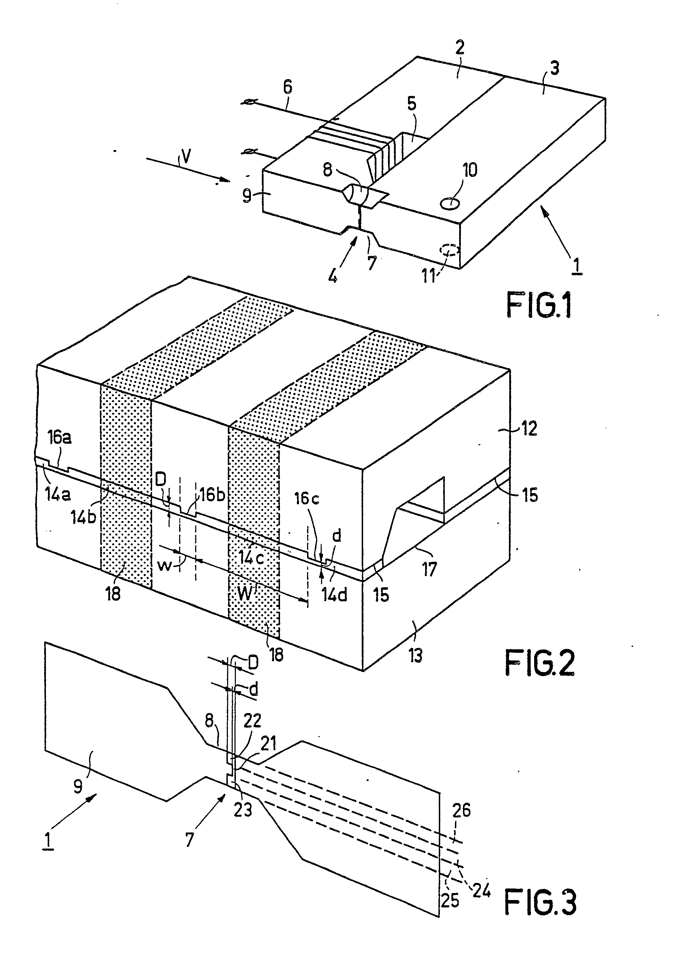

Figure 1 shows a magnetic head 1 according to the invention having two core parts of magnetic material 2, 3 between which a non-magnetic gap area 4 is formed. Said gap area 4 which is bounded by indentations or recesses 7, 8 extending partly in the tape contact face 9 and partly in the side faces 10, 11 of the head 1, comprises a central area having a dimension in the relative direction of movement V with respect to a magnetic tape which is selected for transducing the carrier frequency of a video signal. The width of the central gap area is defined by two side gap areas having a rectangular cross-section and having a considerably larger dimension (for example at least ten times larger) in the relative direction of movement V.

Magnetic head 1 is formed from an assembly of two blocks of core material 12, 13 bonded together by means of glass (Figure 2). Channels 14a, 14b, 14c, 14d . . . having a width W of approximately 500 µm and a depth D of approximately 10 µm have previously been etched in gap-bounding area 15 of block 12. In the case of which the core material is (monocrystalline) Mn-Zn ferrite, an effective method of etching channels 14a, 14b, 14c, 14d . . . with straight walls down to such a depth is ion etching in a reactive (chlorine-containing or bromine-containing) plasma, so-called reactive ion etching. A suitable plasma forms, for example, $BCl_3$. Comparatively high (0.5—5 W/cm²) sputtering powers are necessary. A useful mask material in this context is $Al_2O_3$ which is etched away 5 to 10 times less rapidly than Mn-Zn ferrite. "Ridges" 16a, 16b, 16c, . . . remain between the channels 14a, 14b, 14c, 14d after etching and have a width W which corresponds to the track width of the system for which the magnetic heads are destined (approximately 20 µm ). Core blocks 12, 13 are bonded together by means of glass which fills at least the channels 14a, 14b, 14c, 14d in such manner that the distance d of ridges 16a, 16b, 16c, . . . of core block 12 to gap-bounding area 17 of core block 13 corresponds to the desired gap length (0.3 to 0.5 µm). An elegant method is to ensure that the mask material which covered the ridges in the etching process, after etching just has said thickness of 0.3 to 0.5 µm so that it can remain and may serve as a spacer. Alternatively, channels may be etched in both gap-bounding areas 15, 17. In order to obtain separate magnetic heads such as magnetic head 1 of Figure 1, the assembly of core blocks 12, 13 is sawn into a number of slices after the bonding process. The saw-cuts are indicated by the shaded areas 18.

Figure 3 which is a plan view of the tape contact face 9 of magnetic head 1 of Figure 1 shows how the indentations 7, 8 which have been made by means of a laser define the width of gap area 4. Gap area 4 thus has a central part 21 having a gap length d (from 0.3 to 0.5 µm) for transducing luminance signals which part is flanked by side gap areas 22, 23 having a gap length D (of, for example, 10 µm) for suppressing luminance signals.

During operation the central gap area 21 is in a flux-coupling relationship with a signal track 24 on a magnetic tape. In order to be able to control the position of magnetic head 1 in such manner that gap area 21 cooperates only with track 24, the head 1 has gap areas 21, 22, 23 all having an equal width (for example, 22 µm), and, besides luminance signals, also tracking signals are written in the tracks 25, 26 immediately adjoining track 24 in a wavelength which is not suppressed by the gap areas 22, 23 but is just tranduced. A tracking (or track positioning) signal having a wavelength of 50 µm can be transduced, for example, by a gap having a gap length of 10 µm. The indentations 7,8 ensure that no tracking signals of tracks situated farther away can be transduced. As a result of the special design of the magnetic head according to the invention the laser beam during making the indentations 7, 8 remains remote from the central gap area 4, however, so that the definition of the central gap area 4 cannot be spoiled.

**Claims**

1. A magnetic head having a core of a magnetic material which includes two spaced core parts of a width which is larger than the width of a recording/playback track, between which core parts a gap filled with non-magnetic material is formed which has a central gap part having a gap length which is selected for transducing the carrier frequency of a video signal, said central gap part being flanked on both sides by side gaps of a gap length which is selected for suppressing the carrier frequency of a video signal, characterized in that the side gaps end in recesses made in the side edges of the core parts, their widths being substantially equal to the width of the central gap portion, and their lengths being adapted for reproducing track positioning signals.

2. A magnetic head as claimed in Claim 1, characterized in that the lengths of the side gaps are adapted to reproduce track positioning signals having a wavelength in the order of magnitude of 50 µm.

3. A magnetic head as claimed in Claim 1, characterized in that the lengths of the side gaps are at least ten times as large as the length of the central gap part.

4. A magnetic head as claimed in Claim 1, characterized in that one core part has a gap-bounding face which is flat and that the other core part has a gap-bounding face in which channels of a defined depth have been provided on both sides of the central gap part by means of an etching process.

5. A magnetic head as claimed in Claim 1, characterized in that both core parts have a gap-bounding face in which channels of a defined depth have been provided on both sides of the central gap part by means of an etching process.

6. A magnetic head as claimed in Claim 4 or 5, characterized in that the channels have a substantially rectangular cross-section.

7. A magnetic head as claimed in Claim 1, 4 or 5, characterized in that the central gap part is filled with a material which has a higher resistance to etching than the material of the core.

8. A magnetic head as claimed in Claim 5, characterized in that the material of the core is Mn-Zn-ferrite and the material which fills the central gap part is $Al_2O_3$.

## Patentansprüche

1. Magnetkopf mit einem Kern aus magnetischem Material mit zwei im Abstand voneinander angeordneten Kernteilen mit einer Breite grösser als die Breite einer Aufnahme/-Wiedergabespur, wobei zwischen den Kernteilen ein mit nicht magnetischem Werkstoff gefüllter Spalt mit einem zentralen Spaltteil gebildet ist, dessen Spaltlänge zum Übertragen der Trägerfrequenz eines Videosignals gewählt ist, wobei der zentrale Spaltteil an beiden Seiten Seitenspalte mit einer Spaltlänge aufweist, die zum Unterdrücken der Trägerfrequenz eines Videosignals ausgewählt ist, dadurch gekennzeichnet, dass die Seitenspalte in Aussparungen in den Seitenrändern der Kernteile auslaufen, wobei ihre Breiten im wesentlichen gleich der Breite des zentralen Spaltteils und ihre Längen zum Wiedergeben von Spurpositionierungssignalen gewählt sind.

2. Magnetkopf nach Anspruch 1, dadurch gekennzeichnet, dass die Längen der Seitenspalte zum Wiedergeben von Spurpositionierungssignalen mit einer Wellenlänge in der Grössenordnung von 50 μm ausgelegt sind.

3. Magnetkopf nach Anspruch 1, dadurch gekennzeichnet, dass die Längen der Seitenspalte zumindest zehnmal grösser als die Länge des zentralen Spaltteils sind.

4. Magnetkopf nach Anspruch 1, dadurch gekennzeichnet, dass ein Kernteil ein flache, spaltbegrenzende Fläche und der andere Kernteil eine spaltbegrenzende Fläche besitzt, in der Kanäle mit einer bestimmten Tiefe an beiden Seiten des zentralen Spaltteils mittels eines Atzverfahrens angebracht sind.

5. Magnetkopf nach Anspruch 1, dadurch gekennzeichnet, dass beide Kernteile je eine spaltbegrenzende Fläche besitzen, in denen Kanäle mit einer bestimmten Tiefe an beiden Seiten des zentralen Spaltteils mittels eines Ätzverfahrens angebracht sind.

6. Magnetkopf nach Anspruch 4 oder 5, dadurch gekennzeichnet, dass die Kanäle einen im wesentlichen rechteckigen Querschnitt besitzen.

7. Magnetkopf nach Anspruch 1, 4 oder 5, dadurch gekennzeichnet, dass der zentrale Spaltteil mit einem Werkstoff gefüllt ist, der eine höhere Widerstandsfähigkeit gegen einen Ätzvorgang als der Werkstoff des Kernes hat.

8. Magnetkopf nach Anspruch 5, dadurch gekennzeichnet, dass der Werkstoff des Kernes Mn-Zn-Ferrit und der den zentralen Spaltteil füllende Werkstoff $Al_2O_3$ ist.

## Revendications

1. Tête magnétique munie d'un noyau en matériau magnétique comprenant deux parties de noyau d'une largeur supérieur à la largeur de la piste d'enregistrement et de reproduction, parties entre lesquelles est formé un entrefer rempli d'un matériau non magnétique et muni d'une partie d'entrefer centrale d'une longueur d'entrefer qui est choisie pour transmettre la fréquence porteuse d'un signal vidéo, ladite partie d'entrefer centrale étant flanqué, des deux côtés, d'entrefers latéraux d'une longueur d'entrefer qui est choisi pour supprimer la fréquence porteuse d'un signal vidéo, caractérisée en ce que les entrefers latéraux se terminent dans des évidements réalisés dans les bords latéraux des parties de noyau, leur largeur étant pratiquement égale à la largeur de la partie d'entrefer centrale, et leurs longueurs étant adaptées pour la réalisation de signaux de positionnement de piste.

2. Tête magnétique selon la revendication 1, caractérisée en ce que les longueurs des entrefers latéraux sont concues de façon à réaliser des signaux de positionnement de piste présentant une longueur d'onde de l'ordre de grandeur de 50 μm.

3. Tête magnétique selon la revendication 1, caractérisée en ce que les longueurs des entrefers latéraux sont supérieures d'au moins dix fois à la longueur de la partie d'entrefer centrale.

4. Tête magnétique selon la revendication 1, caractérisé en ce qu'une partie de noyau présente une face délimitant l'entrefer, dans laquelle sont ménagés, à l'aide d'un processus de décapage des canaux d'une profondeur définie des deux côtés de la partie centrale.

5. Tête magnétique selon la revendication 1, caractérisée en ce que les deux parties de noyau présentent une face délimitant l'entrefer dans laquelle sont réalisés, à l'aide d'un processus de décapage des canaux d'une profondeur définie des deux côtés de la partie d'entrefer centrale.

6. Tête magnétique selon la revendication 4 ou 5 caractérisée en ce que les canaux présentent une section transversale pratiquement rectangulaire.

7. Tête magnétique selon la revendication 1, 4 ou 5, caractérisée en ce que la partie d'entrefer centrale est remplie d'un matériau présentant une plus grande résistance de décapage que le matériau du noyau.

8. Tête magnétique selon la revendication 5, caractérisée en ce que le matériau du noyau est du ferrite de Mn-Zn et le matériau remplissant la partie d'entrefer centrale est $Al_2O_3$.

FIG.1

FIG.2

FIG.3